# EUROPÄISCHE PATENTSCHRIFT

(11) **EP 0 368 120 B1**
(45) Veröffentlichungstag und Bekanntmachung des Hinweises auf die Patenterteilung: **07.01.1993**
(21) Anmeldenummer: 89120168.3
(22) Anmeldetag: 31.10.1989
(51) Int. Cl.: B60T 11/16

(54) **Ventil**
Valve
Valve

(30) Priorität: 05.11.1988 DE 3837650
(43) Veröffentlichungstag der Anmeldung: 16.05.1990
(73) Patentinhaber: DEERE & COMPANY, Moline, Illinois 61265 (US)
(72) Erfinder: Halabiya, Sabah, Dipl.-Ing., D-6839 Rheinhausen (DE)
(74) Vertreter: Feldmann, Bernhard

(56) Entgegenhaltungen:
- DE-A- 1 680 211
- DE-A- 3 241 802

## Beschreibung

Die Erfindung betrifft ein Ventil, insbesondere ein Bremsventil, gemäß den Merkmalen des Oberbegriffes des Patentanspruches 1.

Es sind Ventile bekannt, bei deren Betätigung Arbeitsorgane zunächst in Bereitschaftsstellung gebracht werden (Füllen) und bei deren weiterer Betätigung an die Arbeitsorgane der eigentliche Arbeitsdruck geliefert wird (Drücken). Bei einer hydraulischen Bremsanlage muß beispielsweise der Bremszylinder zunächst soweit mit Hydraulikflüssigkeit gefüllt werden, bis der Bremskolben an der Bremsplatte anliegt. Erst danach tritt bei weiterer Druckbeaufschlagung die eigentliche Bremswirkung ein. Die Bemessung des hydraulischen Bremssystems muß demgemäß so erfolgen, daß die von seinem Bremsventilzylinder (Geberzylinder) verdrängte Ölmenge ausreicht, um den Bremszylinder (Nehmerzylinder) auszufüllen und den Kolben des Bremszylinders an die Bremsplatte anzudrücken. Ferner muß der durch das Bremsventil erzeugte Öldruck ausreichen, um die erforderliche Bremswirkung zu erreichen.

Die verdrängte Ölmenge läßt sich durch Vergrößerung von Durchmesser und Hub des Bremsventilkolbens steigern, während für eine Erhöhung des Öldruckes die auf den Bremsventilkolben aufgebrachte Bremskraft zu vergrößern ist. Der konstruktiven Auslegung des Hubes und der Bremskraft sind jedoch Grenzen gesetzt. Welcher Hub und welche Bremskraft realisiert werden können, hängt von den jeweiligen Gegebenheiten ab. Der Hub ist beispielsweise bei einer Fahrzeugbremse von dem maximalen Bremspedalweg abhängig, der durch den optimalen Fußweg vorgegeben ist. Die Bremskraft wird bei einer Fußbremse durch die Wirkung der Fußkraft auf das Bremspedal erzeugt und muß für die gewünschte Bremsung ausreichen. Die Fußkraft soll dabei den vom Gesetzgeber festgelegten Höchstwert nicht überschreiten.

Einen erhöhten Öldruck und damit eine erhöhte Bremswirkung ließe sich bei vorgegebener gleichbleibender Fußkraft auch dadurch realisieren, daß der Bremsventilkolben in seinem Durchmesser kleiner ausgelegt werden würde. Hierbei müßte jedoch der Hub des Bremsventilkolbens vergrößert werden, um die erforderliche Füllmenge für den Bremszylinder bereitstellen zu können. Der Hub ist jedoch durch den optimalen Fußweg begrenzt.

Bei der Auslegung einer Bremsanlage müssen Fußkraft, Fußpedalübersetzung, Fußweg, Bremsventilzylinder und Bremszylinder untereinander abgestimmt werden. Durch eine Vergrößerung des Querschnittes des Bremsventilzylinders kann zwar der Fußweg verringert werden, hierdurch wird jedoch, gleichbleibende Fußkraft vorausgesetzt, auch die aufgebrachte Bremskraft verringert. Entsprechende Probleme können auch bei der Auslegung von Ventilen für andere Einsatzgebiete auftreten.

Durch die DE-A-1 680 211 ist eine hydraulische Kolbenpumpe, die als Hauptbremszylinder für eine Bremsanlage von Fahrzeugen dient, bekannt geworden, bei der der gesamte Kolbenhub in zwei Arbeitsstufen unterteilt ist. In der ersten Arbeitsstufe wird mit großer wirksamer Kolbenfläche bei geringem Druck ein großes Flüssigkeitsvolumen und in der zweiten Stufe wird mit kleiner wirksamer Kolbenfläche bei hohem Druck ein kleines Flüssigkeitsvolumen verdrängt. Der der großen Kolbenfläche zugeordnete äußere Axialraum des Bremszylinders steht über ein als Druckbegrenzer wirkendes Einwegventil mit einem Vorratsbehälter in Verbindung. Die Umschaltung von der ersten Arbeitsstufe in die zweite erfolgt durch eine Drucksteuerung. Übersteigt der Druck im inneren Axialraum, der der kleineren Kolbenfläche zugeordnet ist, den Schließdruck des Einwegventils, so wird eine Staudichtung verschoben und eine Überströmbohrung zwischen dem inneren und äußeren Axialraum geschlossen. In der zweiten Arbeitsstufe muß neben der eigentlichen Bremskraft, die auf die kleinere Kolbenfläche wirkt, auch die Kraft zum Offenhalten des Einwegventils durch die Bedienungsperson aufgebracht werden. Ferner entsteht beim Entlasten in dem äußeren Axialraum ein Unterdruck, dem zufolge ein verzögertes Nachlassen der Bremswirkung eintreten kann.

Die mit der Erfindung zu lösende Aufgabe wird darin gesehen, ein Ventil der eingangs genannten Art zu schaffen, durch das einerseits die gegenläufigen Bemessungsregeln überwunden werden können, d. h. bei dem mit relativ geringem Hub des Ventilkolbens eine relativ große Füllmenge und ein relativ großer Arbeitsdruck an das Organ (z. B. Bremszylinder) abgegeben werden können. Andererseits soll es möglich sein, daß der erste Druckraum in der Druckstufe und beim Rückstellen des Ventilkolbens entlastet ist.

Diese Aufgabe wird erfindungsgemäß durch die kennzeichnenden Merkmale des Patentanspruches 1 gelöst. In Ruhestellung des Kolbens, d. h. solange kein Druck an das Arbeitsorgan abgegeben wird, stehen sich Ansatz und Ausnehmung gegenüber, wobei ein axialer Abstand gegeben ist. Wird der Kolben axial verschoben, um das Arbeitsorgan mit Druck zu beaufschlagen, gleitet der Ansatz in die Ausnehmung. Dabei wird der Raum innerhalb der Ausnehmung gegenüber dem übrigen vor der Stirnseite des Kolbens liegenden Raum dichtend abgeschlossen. Auf diese Weise wird der Druckraum vor der Kolbenstirnseite in wenigstens zwei Teilräume unterteilt (die Anzahl der Teilräume ist abhängig von der Anzahl der Ansätze und der korrespondierenden Ausnehmungen).

Jeder der Teilräume kann prinzipiell zur Druckerzeugung in einem Arbeitsorgan herangezogen werden. Jedem der Teilräume ist ein bestimmter wirksamer Kolbenquerschnitt zugeordnet. Während in der Anfangsphase der Kolbenbewegung der gesamte Kolbenquerschnitt zur Druckerzeugung herangezogen wird, verringert sich nach Erreichen der Druckstufe der wirksame Kolbenquerschnitt, der der Druckerzeugung dient. Die Kolbenkraft kann sich nun auf diesen verringerten Querschnitt konzentrieren, was zu einer Druckerhöhung in diesem Bereich führt.

Da der axiale Abstand zwischen Ansatz und Ausnehmung so bemessen ist, daß die diesem Abstand entsprechende Hydraulikflüssigkeitsmenge in etwa ausreicht, um das Arbeitsorgan von seiner Ruhestellung in seine Bereitschaftsstellung zu bringen, ist das Ventil in der Lage, in einer ersten Stufe (Füllstufe) mit einem großen wirksamen Kolbendurchmesser eine genügende Ölmenge an das Arbeitsorgan zu liefern, um dieses zunächst auszufüllen. Der Öldruck kann dabei relativ niedrig bleiben und muß lediglich ausreichen, um die Rückstellkräfte des Arbeitsorganes zu überwinden. Handelt es sich bei dem Arbeitsorgan um einen Bremszylinder, so kann dieser während der Füllstufe zunächst ausgefüllt werden, so daß der Bremskolben an die Bremsplatten in Anlage gebracht wird. Der Öldruck braucht hierbei lediglich auszureichen, um die Dichtungsreibungen und die Rückholfederkraft des Bremskolbens zu überwinden. Nach Beendigung dieser ersten Stufe liegt der Bremskolben an der Bremsscheibe an. In einer zweiten Stufe, der sogenannten Druckstufe, wird der für die Bremsung nötige Öldruck mit einem kleineren Kolbendurchmesser erzeugt.

Das erfindungsgemäße Ventil ist geeignet, um die genannte Aufgabe zu erfüllen. Es hat einen einfachen Aufbau und ist preisgünstig herstellbar. Es ist ferner in der Lage, bei relativ geringem Hub des Ventilkolbens eine relativ große Füllmenge und einen relativ großen Arbeitsdruck abzugeben.

Zweckmäßigerweise sind Ansatz und Ausnehmung zylinderförmig ausgebildet und hinsichtlich der Zylinderbohrung axial ausgerichtet. Zur Abdichtung der Ausnehmung gegenüber dem übrigen Druckraum dient ein O-Ring, der bei in die Ausnehmung eingreifendem Ansatz dichtend an beiden Elementen anliegt.

Gemäß einer bevorzugten Ausgestaltung der Erfindung ist lediglich ein zylindrischer Ansatz und eine zylindrische Ausnehmung vorgesehen. Ansatz und Ausnehmung sind konzentrisch zur Ventilzylinderbohrung ausgerichtet. Hierbei gibt es zwei bevorzugte alternative Anordnungen von Ansatz und Ausnehmungen. Entweder ist der Ansatz an dem der Kolbenstirnseite gegenüberliegenden Teil befestigt und die Ausnehmung befindet sich in dem beweglichen Kolben des Ventils (Fig. 1, 2 und 4), oder es ist umgekehrt, so daß der Ansatz am beweglichen Kolben befestigt ist, während die Ausnehmung sich im gegenüberliegenden Teil befindet (Fig. 3 und 5).

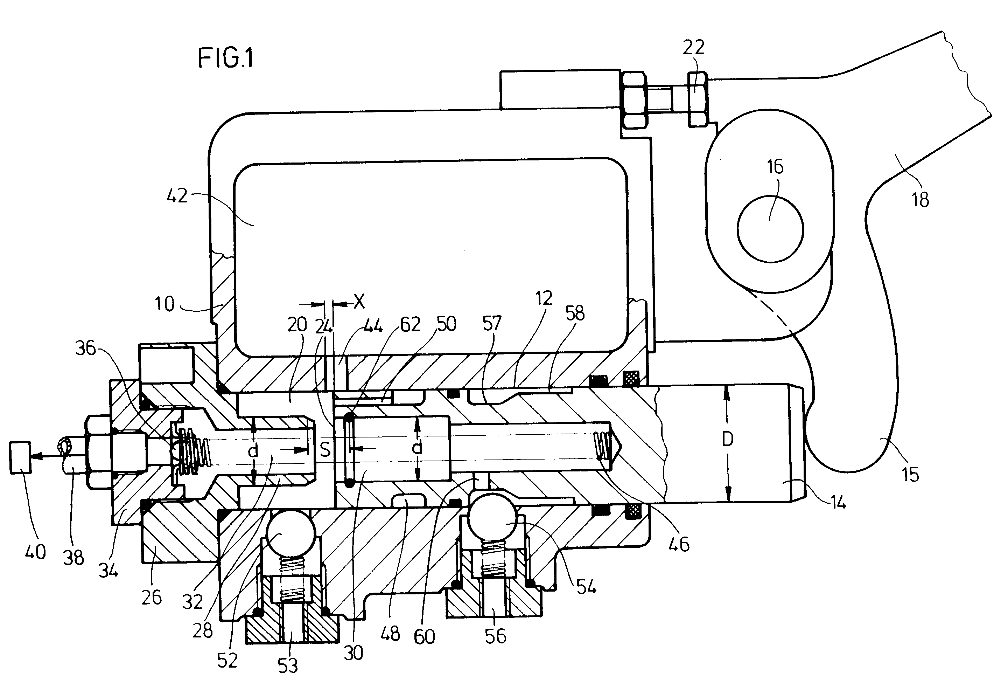

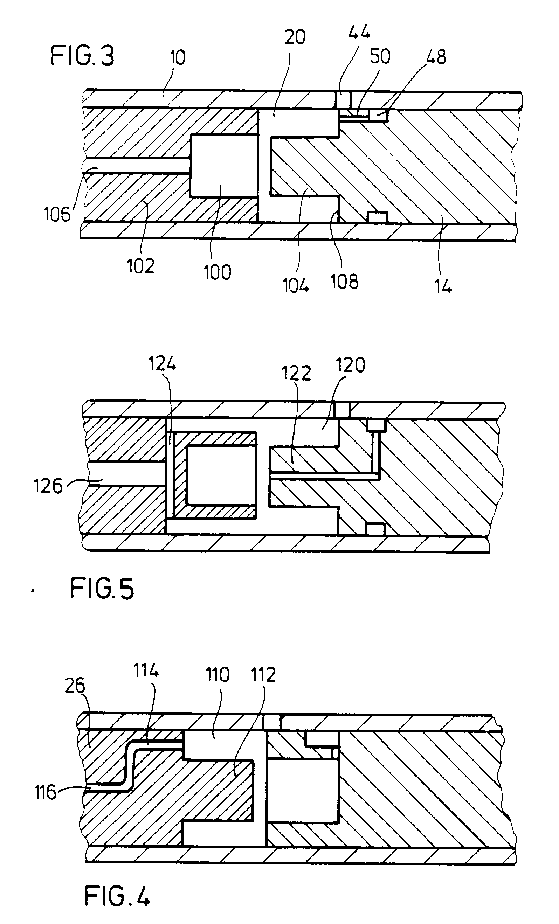

Auch bei der Frage, welcher der Teilräume des Druckraumes während der Druckstufe zur Drucklieferung an das Arbeitsorgan herangezogen werden soll, sind wenigstens zwei Lösungen denkbar. Es könnte beispielsweise der den Ansatz umgebende Raum hierfür herangezogen werden (Fig. 4 und 5). Eine konstruktiv besonders einfache Lösung ergibt sich jedoch, wenn der durch die Ausnehmung gebildete Raum mit dem Arbeitsorgan hydraulisch verbunden wird (Fig. 1, 2 und 3). Diese Verbindung kann beispielsweise als konzentrisch zur Ventilzylinderbohrung ausgerichtete Bohrung in dem der Kolbenseite gegenüberliegenden Teil ausgebildet sein.

Eine zweckmäßige Ausgestaltung der Erfindung sieht vor, daß Ventilmittel vorgesehen sind, durch die eine Verbindung zwischen dem Druckraum und einem Vorratsbehälter für Hydraulikflüssigkeit herstellbar ist. Diese Verbindung soll dann bestehen, wenn sich der Kolben in Ruhestellung befindet, so daß sich das Öl in dieser Stellung entspannen kann. Bei einer Verschiebung des Kolbens aus der Ruhestellung heraus wird die Verbindung unterbrochen. Das Verschließen kann dadurch erfolgen, daß sich die Kolbenzylinderfläche über die Öffnung eines in die Zylinderbohrung hineinragenden Verbindungskanals schiebt.

Die volle Wirksamkeit des erfindungsgemäßen Ventils wird dann erreicht, wenn der Teilraum, der während der Druckstufe nicht mit dem Arbeitsorgan in Verbindung steht, während der Druckstufe druckentlastet wird. Hierzu sind vorzugsweise Ventilmittel vorgesehen, durch die zwischen dem genannten Teilraum und einem Vorratsbehälter eine hydraulische Verbindung herstellbar ist. Als Ventilmittel ist vorzugsweise ein Kanal im Zylindergehäuse vorgesehen, der einen Vorratsbehälter mit der Zylinderbohrung verbindet. Dieser Kanal wirkt mit einer auf der äußeren Zylinderfläche des Kolbens angebrachten Ringnut zusammen, welche über einen weiteren Kanal mit besagtem Teilraum in Verbindung steht. Durch Verschiebung des Kolbens kann eine Verbindung zwischen dem zu entlastenden Teilraum über die genannten Kanäle und die Ringnut zum Vorratsbehälter hergestellt werden.

Einer weiteren zweckmäßigen Ausgestaltung der Erfindung zufolge, steht der genannte Teilraum, der nicht zur Druckerzeugung während der Druckstufe dient, über ein Überdruckventil mit einem Vorratsbehälter in Verbindung. Es handelt sich bei diesem Überdruckventil zweckmäßigerweise um ein Druckregulierventil, welches so eingestellt ist, daß es öffnet, sofern der Druck größer wird als der zur Überwindung der Dichtungsreibung und der Rückholfedern des Arbeitsorganes erforderliche Druck. Dieses Überdruckventil dient insbesondere dazu, in der ersten Stufe (Füllstufe) einen zu hohen Druckaufbau zu vermeiden, so daß ein Ineinanderschieben des Ansatzes in die Ausnehmung gewährleistet ist.

Besonders vorteilhaft ist eine Anordnung des Druckventils, bei der dieses neben seiner Überdruckfunktion eine Druckentlastung bei Ruhestellung des Kolbens sowie eine Druckentlastung des besagten, eingeschlossenen Teilraumes während der Druckstufe ermöglicht. Als konkrete Lösungsmöglichkeit kommen hierbei die Merkmale des Patentanspruches 12 in Betracht. Diese Ausgestaltung ermöglicht eine relativ kurze Baulänge des Ventils.

Anhand der Zeichnung, die mehrere Ausführungsbeispiele der Erfindung zeigt, sollen die Erfindung sowie weitere Vorteile und vorteilhafte Ausgestaltungen der Erfindung erläutert und näher beschrieben werden.

Es zeigt:

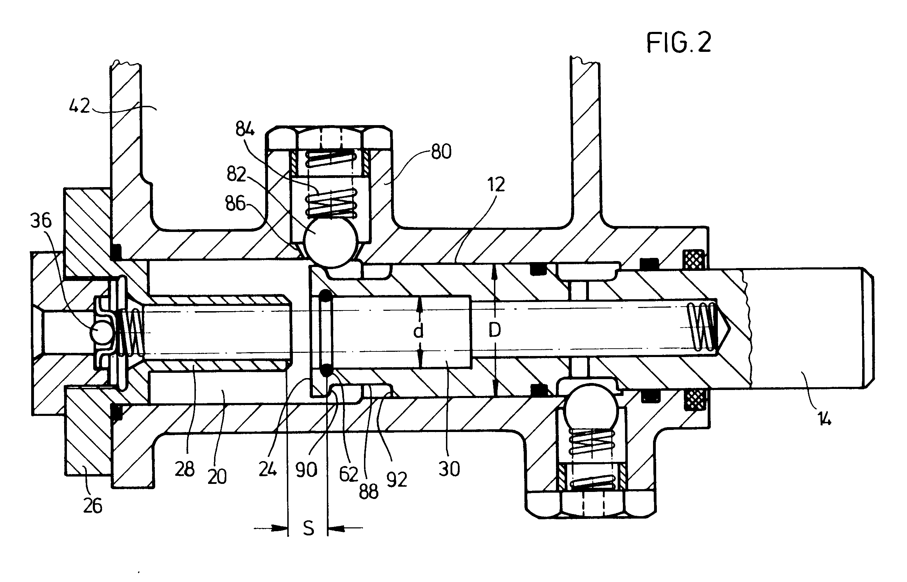

Fig. 1 und 2 je einen Querschnitt durch ein erfindungsgemäßes Ventil,
Fig. 3, 4 und 5 je die schematische Darstellung alternativer Anordnungen von Ansatz und Ausnehmung der erfindungsgemäßen Ventile.

In Fig. 1 ist ein Bremsventil dargestellt. Es besteht aus einem Bremszylindergehäuse 10 mit einer Zylinderbohrung 12, die einen axial verschiebbaren Kolben 14 aufnimmt. Der Kolben 14 ragt mit einem Ende aus der Zylinderbohrung 12 heraus. An diesem Ende liegt der freie Schenkel 15 eines um den Drehpunkt 16 verschwenkbaren Bremshebels 18 an. Bei einer Betätigung des Bremshebels 18 zum Zwecke der Bremsung drückt der freie Schenkel 15 den Kolben 14 weiter in die Zylinderbohrung 12 hinein, wodurch in dem Druckraum 20 ein Bremsdruck erzeugt wird. Die Rückstellung des Bremshebels 18 wird durch einen, über eine Stellschraube 22 einstellbaren Anschlag begrenzt.

Der Kolbenstirnfläche 24 gegenüberliegend ist ein Flanschteil 26 angeordnet, welches die Zylinderbohrung 12 dichtend verschließt. Das Flanschteil 26 trägt einen axial zur Zylinderbohrung 12 ausgerichteten, nach innen weisenden, zylindrischen Ansatz 28, dem eine als Sackbohrung ausgebildete zylindrische Ausnehmung 30 im Kolben 14 gegenüberliegt. Der Flanschteil 26 weist eine axiale Bohrung 32 auf. Diese Bohrung 32 ist durch einen Ventileinsatz 34 verschlossen. Der Ventileinsatz 34 nimmt ein Rückschlagventil 36 auf, welches als federbelastetes Kugelventil ausgebildet ist. Der Ventileinsatz 34 ist über eine Hydraulikleitung 38 mit einem nicht näher dargestellten Bremszylinder 40 verbunden. Das Rückschlagventil 36 hat die Aufgabe, ein schnelles Zurückfließen des Öles vom Bremszylinder 40 in den Druckraum 20 des Bremsventiles zu verhindern.

In das Bremszylindergehäuse 10 ist ein Ölbehälter 42 integriert. Dieser steht über eine Bohrung 44 mit der Zylinderbohrung 12 in Verbindung. Mit Verschiebung des Kolbens 14 ist die Bohrung 44 durch die äußere Zylinderfläche des Kolbens 14 verschließbar. Der Kolben 14 wird durch eine Druckfeder 46, die sich an dem Ventileinsatz 34 und der Sackbohrung 30 des Kolbens 14 abstützt, gegen den freien Schenkel 15 des Bremshebels 18 gedrückt. Durch die Schraube 22 läßt sich der Anschlag so einstellen, daß eine Verbindung zwischen dem Ölbehälter 42 und dem Druckraum 20 in Ruhestellung gewährleistet ist. Das Öffnungsmaß ist mit X gekennzeichnet.

Auf der äußeren Zylinderfläche des Kolbens 14 befindet sich beabstandet zur Kolbenstirnfläche 24 eine Ringnut 48, die durch einen Kanal 50 mit dem vor der Stirnfläche 24 des Kolbens 14 liegenden Druckraum 20 in Verbindung steht.

Im Bremszylindergehäuse 10 ist im Bereich des Druckraumes 20 ein Überdruckventil 52 integriert, dessen Austrittsöffnung 53 hydraulisch über eine nicht dargestellte Verbindungsleitung mit dem Ölbehälter 42 in Verbindung steht. Das Überdruckventil besteht im wesentlichen aus einer federbelasteten Kugeldichtung. Die Federkraft wird so eingestellt, daß bei Überschreiten eines vorgebbaren Druckes im Druckraum 20 die Kugel von der Ventildichtung abhebt und einen Öldurchfluß ermöglicht.

Ferner ist im Bremszylindergehäuse 1o ein Druckausgleichventil 54 angeordnet, welches zwischen der Zylinderbohrung 12 und einem entsprechenden Ausgleichsventil eines zweiten Bremsventils angeordnet ist. Die an dem Anschluß 56 angebrachte Verbindungsleitung wurde nicht dargestellt. Das Druckausgleichsventil besteht im wesentlichen aus einer Kugel, die durch eine Feder auf den Ventilsitz gepreßt wird. Die Kugel ragt teilweise in die Zylinderbohrung 12 ein, was durch eine ringförmige Ausnehmung 57 in der Kolbenaußenfläche ermöglicht wird. An diese Ausnehmung 57 schließt sich ein zylindrischer Teil 58 des Kolbens 14 an, dessen Außendurchmesser geringer ist als der Durchmesser der Zylinderbohrung 12. Die ringförmige Ausnehmung 57 steht über einen Kanal 60 mit der Ausnehmung 30 des Kolbens 14 in Verbindung.

Die Wirkungsweise des in Fig. 1 dargestellten Bremsventils ist folgende:
Das Bremsventil ist in Ruhestellung dargestellt, d.h. der Bremshebel 18 wird nicht durch eine Bremskraft beaufschlagt. Der Kolben befindet sich infolge der Federkraft der Druckfeder 46 in seiner äußersten, rechten Position und gibt einen Teil des Kanals 44 zwischen Ölbehälter 42 und Druckraum 20 frei. Der Druckraum 20, die zur Bremse führende Leitung 38 und der Bremszylinder 40 sind entlastet. Es tritt keine Bremswirkung auf. Das Überdruckventil 52 und das Druckausgleichsventil 54 sind geschlossen.

Mit Betätigung des Bremshebels 18 wird der Kolben 14 nach links verschoben. Dabei wird zunächst der Kanal 44 zwischen dem Ölbehälter 42 und dem Druckraum 20 verschlossen, so daß das Öl aus dem Druckraum 20 nicht mehr in den Ölbehälter 42 entweichen kann. Bei weiterer Bewegung des Kolbens 14 nach links steigt der Druck im Druckraum 20 an und drückt das Öl über die Leitung 38 in den Bremszylinder 40. Der Bremszylinder 40 wird gefüllt, wobei unter Überwindung der Dichtungsreibung und der Rückstellfederkraft der Bremskolben an die Bremsplatten angedrückt wird. Gleichzeitig mit der Bewegung des Kolbens 14 nach links wird die Kugel des Ausgleichsventils 54 durch die Zylinderfläche 58 des Kolbens 14 gegen die Feder des Ausgleichsventils 54 gedrückt, so daß eine Verbindung über ein nicht dargestelltes Verbindungsrohr mit einem weiteren Bremsventil hergestellt ist. Auf diese Weise gleicht sich der Druck in einem aus zwei Bremspedalen und zwei Bremsventilen bestehenden Bremssystem aus, wenn beide Bremspedale gedrückt werden.

Das eingeschlossene Öl im Druckraum 20 wird zunächst mit relativ geringem Druck in den Bremszylinder 40 gedrückt, und zwar so lange, bis der Bremszylinder mit Öl gefüllt ist und der Bremskolben an der Bremsscheibe anliegt (Füllstufe). Der hierbei erforderliche Öldruck muß zum Überwinden der Dichtungsreibung und der Rückholfedern der Bremskolben ausreichen, was bei der Auslegung des Zylinderdurchmessers D zu berücksichtigen ist. Bei weiterem Drücken des Bremsfußhebels 18 steigt der Öldruck im System etwas an, bis das Überdruckventil 52 sich öffnet. Der Öffnungsdruck wird so eingestellt, daß er etwas oberhalb des Druckes liegt, der zum Überwinden der Dichtungsreibung und der Rückholfederkraft des Bremskolbens erforderlich ist. Das Überdruckventil 52 ermöglicht es, daß der Kolben 14 mit etwa gleichem Kraftaufwand weiter nach links (gemäß Fig. 1) gedrückt werden kann, auch wenn der Bremszylinder 40 bereits mit Öl gefüllt ist.

Bei weiter anstehendem Bremsdruck bewegt sich der Kolben 14 weiter nach links, so daß der Ansatz 28 in die Ausnehmung 30 eingreift. Nach Überwindung des Weges 5 wird die Ausnehmung 30 gegenüber dem Druckraum 20 durch den Dichtungs-O-Ring 62 abgedichtet. In etwa gleichzeitig wird über den Kanal 44, die Ringnut 48 und den Längskanal 50 eine Verbindung zwischen dem Ölbehälter 42 und dem Druckraum 20 geschaffen, so daß der Druckraum 20 drucklos wird. Das Überdruckventil 52 schließt wieder. Jetzt beginnt die zweite Stufe des Bremsvorgangs, die hier mit Druckstufe bezeichnet ist. Die durch den Bremshebel 18 auf den Kolben 14 aufgebrachte Kraft wirkt nunmehr nur auf den kleineren Durchmesser d des Ansatzes 28 bzw. der Ausnehmung 30. Bei gleichbleibender Bremshebelkraft wird damit der Druck im Bremssytem erheblich gesteigert, so daß die erforderliche Bremskraft aufgebracht werden kann.

Bei Entlastung des Bremshebels 18 gleitet der Kolben 14 wieder nach rechts und nimmt seine Ausgangsstellung ein.

In Fig. 2 ist ein weiteres Bremsventil dargestellt, dessen Aufbau von dem in Fig. 1 dargestellten Bremsventil im wesentlichen lediglich durch die Anordnung und Ausgestaltung des Überdruckventils abweicht. Es wurden daher sich entsprechende Bauteile mit den gleichen Bezugsziffern belegt.

Das Überdruckventil 80 ist unmittelbar zwischen dem Ölbehälter 42 und der Zylinderbohrung 12 angeordnet. Eine Kugel 82 wird durch die Kraft einer Feder 84 gegen eine Ventildichtfläche 86 gedrückt. Der Kolben 14 trägt in seiner Mantelfläche eine axial zur Stirnseite 24 beabstandete Nut 88, die wegen einer Durchmesservergrößerung der Zylinderbohrung in ständiger hydraulischer Verbindung mit dem Druckraum 20 steht. In diese Nut greift bei einer mittleren Stellung des Kolbens 14 die Kugel 82 des Überdruckventils 80 soweit ein, daß das Überdruckventil 80 verschlossen ist. Die Lage der Nut 88 ist so gewählt, daß in Ruhestellung des Kolbens (keine Bremsanforderung) die linke Flanke 90 der Nut 88 die Kugel 82 von der Ventildichtungsfläche 86 abhebt, so daß eine Verbindung zwischen dem Ölbehälter 42 und dem Druckraum 20 geschaffen wird. Bei einer Betätigung des Bremshebels 18 gleitet der Kolben 14 nach links, so daß die Kugel tiefer in die Nut 88 eindringen kann und das Überdruckventil 80 verschließt. Sobald der Ansatz 28 in die Ausnehmung 30 eingreift und eine Abdichtung durch den Dichtungsring 62 erfolgt, wird die Kugel 82 von der rechten Flanke 92 der Nut 88 angehoben, so daß wiederum eine Verbindung zwischen dem Ölbehälter 42 und dem Druckraum 20 entsteht. Die Federkraft des Überdruckventils 80 ist so ausgelegt, daß das Überdruckventil 80 erst dann öffnet, wenn im Druckraum 20 ein Druck überschritten wird, der erforderlich ist, um die Dichtungsreibung und die Rückstellfederkraft des Bremskolbens zu überwinden. Die Funktionsweise des in Fig. 2 dargestellten Bremsventils ist analog zu der anhand der Fig. 1 beschriebenen Funktionsweise.

In den Fig. 3, 4 und 5 sind Ausschnitte dreier weiterer Bremsventile schematisch dargestellt. Gemäß Fig. 3 befindet sich die Ausnehmung 100 in dem Abschlußflansch 102 des Bremszylindergehäuses 10. Der in diese Ausnehmung eingreifende Ansatz 104 ist am Kolben 14 angeformt. Auch hier dient ein Kanal 44, eine Ringnut 48 und ein axialer Kanal 50 der Druckentlastung des Druckraumes 20.

Die in den Fig. 4 und 5 dargestellten Bremsventile unterscheiden sich von den in den Fig. 1 bzw. 3 dargestellten im wesentlichen lediglich durch die Lösung der Fragestellung, welcher Teilraum des Druckraumes 20 mit dem Bremszylinder in Verbindung steht. Während bei den Fig. 1 und 3 die Ausnehmung 30 bzw. 100 über eine Leitung 38 bzw. 106 mit dem Bremszylinder in Verbindung steht, ist bei den Bremsventilen gemäß Fig. 4 und 5 ein äußerer Ringraum 110, 120, der den Ansatz 112, 122 umgibt, über entsprechende Kanäle 114, 124 und eine Leitung 116, 126 hydraulisch mit dem Bremszylinder verbunden.

Bei dem in Fig. 4 angedeuteten Bremsventil befindet sich der Ansatz 112 entsprechend dem in Fig. 1 dargestellten Bremsventil am Abschlußflansch 26 des Bremszylindergehäuses 10. Das in Fig. 5 dargestellte Bremsventil ist diesbezüglich mit dem in Fig. 3 dargestellten Bremsventil vergleichbar.

## Patentansprüche

1. Ventil, insbesondere Bremsventil, mit einem Zylinder (10), in dessen Zylinderbohrung (12) ein durch ein Betätigungsorgan (18) axial verschiebbarer Kolben (14) angeordnet ist, wobei zwischen der Stirnseite (24) des Kolbens (14) und einem der Stirnseite (24) axial gegenüberliegenden Teil (28) des Ventils ein erster Druckraum (20) ausgebildet ist, der in Ruhestellung des Ventils über eine Leitung (32, 38) mit einem Arbeitsorgan (40) in Verbindung steht, und wobei im Bereich der Stirnseite (24) des Kolbens (14) und dem gegenüberliegenden Teil (26) wenigstens ein kolbenförmiger Ansatz (28) und wenigstens eine korrespondierende Ausnehmung (30), deren Querschnitte geringer sind als der des Kolbens, dichtend ineinander gleitbar, einen zweiten mit dem Arbeitsorgan (40) verbundenen Druckraum bildend angeordnet sind, dadurch gekennzeichnet, daß sich in Ruhestellung des Ventils der Ansatz (28) und die Ausnehmung (30) axial beabstandet gegenüberstehen und in einer Druckstufe ineinander greifen und den zweiten Druckraum dichtend einschließen, und daß der axiale Abstand (S) zwischen Ansatz (28) und Ausnehmung (30) so bemessen ist, daß die diesem Abstand (S) entsprechende Hydraulikflüssigkeitsmenge in etwa ausreicht, um das Arbeitsorgan von seiner Ruhestellung in seine Bereitschaftsstellung zu bringen.

2. Ventil nach Anspruch 1, dadurch gekennzeichnet, daß der Ansatz (28) und die Ausnehmung (32) zylinderförmig ausgebildet sind.

3. Ventil nach einem der Ansprüche 1 bis 2, dadurch gekennzeichnet, daß der Kolben (14) an seiner Stirnseite (24) eine axiale zylindrische Ausnehmung (30) aufweist, und der der Kolbenstirnseite (24) gegenüberliegende Teil (26) einen axialen zylindrischen Ansatz (28) trägt.

4. Ventil nach einem der Ansprüche 1 bis 3, dadurch gekennzeichnet, daß der Kolben (14) an seiner Stirnseite (108) einen axialen zylindrischen Ansatz (104) trägt, und der der Kolbenstirnseite (108) gegenüberliegende Teil (102) eine axiale zylindrische Ausnehmung (100) aufweist (Fig. 3).

5. Ventil nach einem der Ansprüche 1 bis 4, dadurch gekennzeichnet, daß der mit dem Ansatz (28, 104) verschliefßare, in der Ausnehmung (30, 100) liegende Raum mit dem Arbeitsorgan hydraulisch verbindbar ist.

6. Ventil nach einem der Ansprüche 1 bis 5, dadurch gekennzeichnet, daß Ventilmittel vorgesehen sind, durch die zwischen dem Druckraum (20) im Zylinder und einem Vorratsbehälter (42) für Hydraulikflüssigkeit dann eine hydraulische Verbindung herstellbar ist, wenn sich der Kolben (14) in Ruhestellung befindet.

7. Ventil nach Anspruch 6, dadurch gekennzeichnet, daß die Zylinderbohrung (12) über einen im wesentlichen radialen Kanal (44) mit einem Vorratsbehälter (42) für Hydraulikflüssigkeit in Verbindung steht, wobei der Kanal (44) eine solche Lage einnimmt, daß er bei einer Verschiebung des Kolbens (14) aus dessen Ruhestellung heraus verschlossen wird.

8. Ventil nach einem der Ansprüche 1 bis 7, dadurch gekennzeichnet, daß Ventilmittel vorgesehen sind, durch die zwischen dem eingeschlossenen Raum im Zylinder, der während der Druckstufe des Kolbens (14) nicht mit dem Arbeitsorgan hydraulisch in Verbindung steht, und einem Vorratsbehälter (42) dann eine hydraulische Verbindung herstellbar ist, wenn sich der Kolben (14) in der Druckstufe befindet.

9. Ventil nach Anspruch 8, dadurch gekennzeichnet, daß der Kolben (14) eine äußere, zur Kolbenstirnseite (24) axial beabstandete Ringnut (48) trägt, die über einen im Kolben (14) befindlichen Kanal (50) mit dem Teil der Kolbenstirnseite (24), der nicht den zur Druckerzeugung während der Druckstufe wirksamen Querschnitt bildet, in Verbindung steht, und daß die Ringnut (48) bei einer Lage des Kolbens (14), in der der Ansatz (28) sich dichtend in der Ausnehmung (30) befindet, mit einem zum Vorratsbehälter (42) führenden Kanal (44) in Verbindung steht.

10. Ventil nach einem der Ansprüche 1 bis 9, dadurch gekennzeichnet, daß der eingeschlossene, nicht zur Druckerzeugung während der Druckstufe dienende Raum des Zylinders über ein Überdruckventil (52, 80) mit einem Vorratsbehälter (42) in Verbindung steht.

11. Ventil nach Anspruch 10, dadurch gekennzeichnet, daß das Überdruckventil (80) durch eine Durchführung in der Zylinderwandung des Ventils, welche durch eine federbeaufschlagte Kugel (82) verschließbar ist, gebildet ist, wobei die Kugel (82) in geschlossener Stellung des Überdruckventils (80) teilweise in die Zylinderbohrung (12) eingreift, daß ferner der Kolben (14) eine mit dem eingeschlossenen Raum in Verbindung stehende Nut (88) enthält, in die die Kugel (82) in Schließstellung des Überdruckventils (80) eingreift, und daß die Nut so bemessen ist, daß in der Ruhestellung des Kolbens (14) sowie in einer Lage des Kolbens (14), bei der der Ansatz (28) sich dichtend in der Ausnehmung (30) befindet (Druckstufe), die Kugel (82) von ihrem Schließsitz abgehoben wird.

## Claims

1. A valve, especially a brake valve, with a cylinder (10), in whose cylinder bore (12) is arranged a piston (14) which is axially movable by an actuating member (18), a first pressure chamber (20) being formed between the face (24) of the piston (14) and a part (28) of the valve axially opposed to the face (24), the first pressure chamber being connected to a working member (40) in the rest position of the valve through a line (32, 38), and wherein at least one piston-formed extension (28) and at least one corresponding recess (30) are arranged in the region of the face (24) of the piston (14) for sliding one within the other in sealed manner, with their cross-sections smaller than that of the piston and forming a second pressure chamber corrected to the working member (40), characterized in that, in the rest position of the valve, the extension (28) and the recess (30) are opposed to one another with an axial spacing therebetween and engage one within the other in a pressure stage and enclose the second pressure chamber in sealed manner, and in that the axial spacing (S) between the extension (28) and the recess (30) is of such a size that the amount of hydraulic fluid corresponding to this spacing (S) is approximately sufficient to bring the working member from its rest position into its ready position.

2. A valve according to claim 1, characterized in that the extension (28) and the recess (30) are cylindrically shaped.

3. A valve according to claim 1 or 2, characterized in that the piston (14) has an axial cylindrical recess (30) in its face (24) and the part (26) axially opposed to the piston face (24) carries an axial cylindrical extension (28).

4. A valve according to claim 1 or 2, characterized in that the piston (14) carries an axial cylindrical extension (104) on its face (108) and the part (102) axially opposed to the piston face (108) has an axial cylindrical recess (100) (Figure 3).

5. A valve according to any of claims 1 to 4, characterized in that the chamber disposed in the recess (30, 100) and closable by the extension (28, 104) can be corrected hydraulically to the working member.

6. A valve according to any of claims 1 to 5, characterized in that valve means are provided, through which a hydraulic connection can be made when the piston (14) is in its rest position between the pressure chamber (20) in the cylinder and a reservoir (42) for hydraulic fluid.

7. A valve according to claim 6, characterized in that the cylinder bore (12) is connected to a reservoir (42) through a substantially radial channel (44), the channel (44) having such a position that it is closed by a movement of the piston (14) out of its rest position.

8. A valve according to any of claims 1 to 7, characterized in that valve means are provided through which a hydraulic connection can be made when the piston (14) is in the pressure stage between the enclosed space in the cylinder which is not connected hydraulically to the working member during the pressure stage of the piston (14) and a reservoir (42).

9. A valve according to claim 8, characterized in that the piston (14) has an external annular groove (48) axially spaced from the piston face (24) and which is connected to the part of the piston face (24) which does not pertain to the cross-section effective in the pressure stage for the generation of pressure, and in that the annular groove (48) is connected to a channel (44) leading to the reservoir (42) in a position of the piston (14) in which the extension (28) is sealed in the recess (30).

10. A valve according to any of claims 1 to 9, characterized in that the closed chamber of the cylinder not serving for pressure generation during the pressure stage is in communication with a reservoir (42) through a relief valve (52, 80).

11. A valve according to claim 10, characterized in that the relief valve (80) is formed by a passage through the cylinder wall of the valve which can be closed by a spring-loaded ball (82), wherein the ball (82) engages partially in the cylinder bore (12) in the closed state of the relief valve (80), further in that the piston (14) has a groove (88) in communication with the enclosed space, the ball (82) engaging in the groove (88) in the closed position of the relief valve (80), and in that the groove is of such a size that the ball (82) is lifted off its seat in the rest position of the piston (14) and also in a position of the piston in which the extension (28) is in a sealed position in the recess (30) (pressure stage).

## Revendications

1. Valve, notamment, valve de commande de frein, avec un cylindre (10) dans le perçage cylindrique (12) duquel un piston (14) peut être déplacé axialement par un organe d'actionnement (18), où une première chambre de pression (20) est formée entre le côté frontal (24) du piston (14) et une partie (28) de la valve qui se trouve axialement en vis-à-vis du côté frontal (24), chambre qui, dans la position de repos de la valve, est reliée par une conduite (32, 38) à un organe de travail (40), et où, dans la région du côté frontal (24) du piston (14) et de la partie (26) en vis-à-vis, au moins un appendice en forme de piston (28) et au moins un évidement correspondant (30), dont les sections sont inférieures à celle du piston, sont disposés en pouvant coulisser en étanchéité l'un dans l'autre et en formant une seconde chambre de pression, reliée à l'organe de travail (40),
**caractérisée** en ce que, dans la position de repos de la valve, l'appendice (28) et l'évidement (30) se font face à distance axiale et, dans une étape de pression, ils s'engagent l'un dans l'autre et enferment en étanchéité la seconde chambre de pression, et en ce que la distance axiale (S) entre l'appendice (28) et l'évidement (30) est dimensionnée de telle sorte que la quantité de liquide hydraulique correspondant à cette distance (S) est approximativement suffisante pour amener l'organe de travail de sa position de repos dans sa position de fonctionnement.

2. Valve selon la revendication 1, **caractérisée** en ce que l'appendice (28) et l'évidement (32) sont réalisés cylindriques.

3. Valve selon la revendication 1 ou 2, **caractérisée** en ce que le piston (14) présente un évidement cylindrique axial (30) sur son côté frontal (24), et la partie (26) en vis-à-vis du côté frontal (24) du piston porte un appendice cylindrique axial (28).

4. Valve selon l'une des revendications 1 à 3, **caractérisée** en ce que le piston (14) porte un appendice cylindrique axial (104) sur son côté frontal (108), et la partie (102) en vis-à-vis du côté frontal (108) du piston présente un évidement cylindrique axial (100) (figure 3).

5. Valve selon l'une des revendications 1 à 4, **caractérisée** en ce que la chambre présente dans l'évidement (30, 100), qui peut être fermée par l'appendice (28, 104), peut être reliée hydrauliquement à l'organe de travail.

6. Valve selon l'une des revendications 1 à 5, **caractérisée** en ce que des moyens de distribution hydraulique sont prévus, qui permettent de réaliser une liaison hydraulique, entre la chambre de pression (20) dans le cylindre et un réservoir (42) de liquide hydraulique, lorsque le piston (14) se trouve en position de repos.

7. Valve selon la revendication 6, **caractérisée** en ce que le perçage cylindrique (12) est relié à un réservoir (42) de liquide hydraulique par un canal (44) sensiblement radial, le canal (44) prenant une position telle qu'il est fermé lorsque le piston (14) est déplacé hors de sa position de repos.

8. Valve selon l'une des revendications 1 à 7, **caractérisée** en ce que des moyens de distribution hydraulique sont prévus qui, lorsque le piston (14) se trouve dans l'étape de pression, permettent de réaliser une liaison hydraulique entre un réservoir (42) et la chambre incluse dans le cylindre, qui n'est pas reliée hydrauliquement à l'organe de travail pendant l'étape de pression du piston (14).

9. Valve selon la revendication 8, **caractérisée** en ce que le piston (14) porte une rainure annulaire extérieure (48), axialement distante du côté frontal (24) du piston, qui est reliée, par l'intermédiaire d'un canal (50) se trouvant dans le piston (14), à la partie du côté frontal (24) du piston qui ne constitue pas la section efficace pour la production de pression pendant l'étape de pression, et en ce que la rainure annulaire (48), dans une position du piston (14) dans laquelle l'appendice (28) se trouve en étanchéité dans l'évidement (30), est reliée à un canal (44) menant au réservoir (42).

10. Valve selon l'une des revendications 1 à 9, **caractérisée** en ce que la chambre incluse dans le cylindre, ne servant pas à produire la pression pendant l'étape de pression, est reliée à un réservoir (42) par l'intermédiaire d'une soupape de surpression (52, 80).

11. Valve selon la revendication 10, **caractérisée** en ce que la soupape de surpression (80) est formée par un passage qui est pratiqué dans la paroi cylindrique de la valve et peut être fermé par une bille (82) sollicitée par ressort, la bille (82) s'engageant partiellement dans le perçage cylindrique (12) dans la position fermée de la soupape de surpression (80), en ce que le piston (14) contient une rainure (88) qui est reliée à la chambre incluse et dans laquelle s'engage la bille (82) dans la position de fermeture de la soupape de surpression (80), et en ce que la rainure est dimensionnée de telle sorte que la bille (82) est décollée de son siège de fermeture dans la position de repos du piston (14), ainsi que dans une position du piston (14) dans laquelle l'appendice (28) se trouve en étanchéité dans l'évidement (30) (étape de pression).
